## Europäisches Patentamt

## European Patent Office

## Office européen des brevets

(19)

(11) Publication number: **0 119 670**
**B1**

(12) **EUROPEAN PATENT SPECIFICATION**

(45) Date of publication of patent specification: **20.05.87**

(51) Int. Cl.⁴: **H 02 G 3/04,** F 16 L 3/22, B 21 D 39/06

(21) Application number: **84200409.5**

(22) Date of filing: **21.03.84**

(54) **Cable ladder.**

(30) Priority: **22.03.83 NL 8301020**

(43) Date of publication of application:
**26.09.84 Bulletin 84/39**

(45) Publication of the grant of the patent:
**20.05.87 Bulletin 87/21**

(84) Designated Contracting States:
**AT BE CH DE FR GB IT LI LU NL SE**

(56) References cited:
**FR-A-1 079 919**
**FR-A-2 226 606**
**FR-A-2 300 887**
**FR-A-2 428 759**
**GB-A-1 251 930**
**NL-A-7 109 593**
**NL-A-7 807 345**

(73) Proprietor: **METAALWARENFABRIEK VAN GEEL B.V.**
**Van Salmstraat 76**
**NL-5281 RS Boxtel (NL)**

(72) Inventor: **van Geel, Josephus Johannes**
**1, Molenweide**
**NL-5281 JX Boxtel (NL)**

(74) Representative: **Hoorweg, Petrus Nicolaas et al**
**OCTROOIBUREAU ARNOLD & SIEDSMA**
**Sweelinckplein 1**
**NL-2517 GK The Hague (NL)**

Courier Press, Leamington Spa, England.

## Description

The invention relates to a cable ladder comprising two parallel, relatively spaced beams with rungs arranged between them, wherein each beam is a L-shaped profile of sheet material having a longer and a shorter limb, said short limb being extended with a flange parallel to said longer limb, and having first openings in the flange, each first opening receiving the end section of a respective rung, said beam being furthermore provided with means for locking said end sections of said rungs passed through said first openings.

Cable ladders of the kind set forth and disclosed in NL—A—7109593 are particularly employed as horizontal ladders for power cables. Nevertheless the cable ladder may also be used vertically, for example, in shafts. The supported cables are fixed by clamps to the rungs of the ladder.

The invention has for its object to shape the beams and, respectively, the rungs in a form such that without the need for further expedients the connection between rungs and beams can be established so that mounting of a cable ladder can be appreciably simplified and the cost price is reduced.

However the connection has to be so strong that the rungs cannot turn or shift out of their positions relative to the beams.

The cable ladder embodying the invention is distinguished in that the beam is provided with second openings each at a distance from and opposite an associated said first opening, each associated first and second opening being adapted to receive a respective said end section, the locking means being formed by a resilient strip connected to said flange and directed towards the longer limb, a free edge of said strip being insertable into a recess of a rung.

By arranging the end part of the rung between both openings of the beam a rigid connection is established between rung and beam. The locking means prevent the rung from shifting in a longitudinal sense with respect to the beam.

The resilient strip can be considered as a resilient tongue so that locking is automatically obtained as soon as during mounting the recess of the rung approaches the strip. The place of the recess in the rung is, of course, so that the arrangement of the end part of the rung between the stop means and in the opening is ensured.

In a preferred embodiment the second opening is arranged in a ridge of the longer limb facing the flange. It is thus ensured that by a minimum amount of material of the beam a maximum distance between the openings is obtained, which contributes to a firm joint between rung and beam.

The above-mentioned and further features of the invention will become apparent from the following description of two embodiments.

The drawings show in:

Fig. 1 a perspective view of part of a cable ladder near the joint between a rung and the beam,

Fig. 2 a vertical, longitudinal sectional view of a cable ladder with cables arranged therein,

Fig. 3 plan views of part of a cable ladder with differently disposed rungs in the embodiment of Fig. 1,

Fig. 4 a vertical cross-sectional view of the cable ladder at a rung as shown in Fig. 3,

Fig. 5 a perspective plan view of the component parts of the cable ladder prior to mounting on the mounting bench,

Fig. 6 a perspective plan view like Fig. 1 of a second embodiment of the cable ladder.

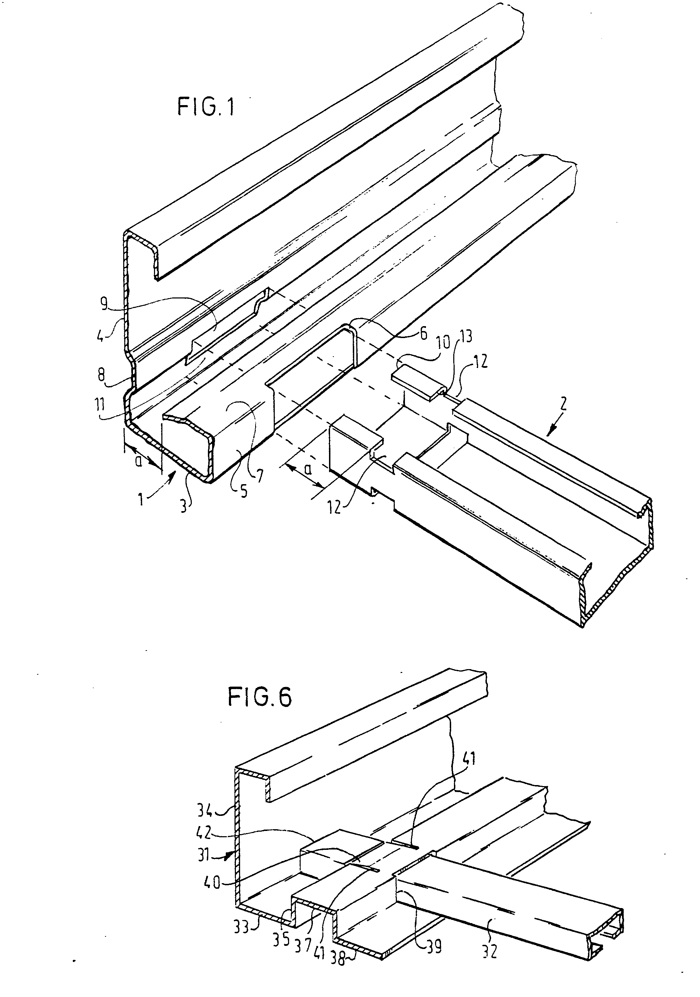

In Fig. 1 reference numeral 1 designates the beam of the cable ladder. To the beam rungs 2 can be fastened, the connection being established solely by the particular design of cable ladder in accordance with the invention.

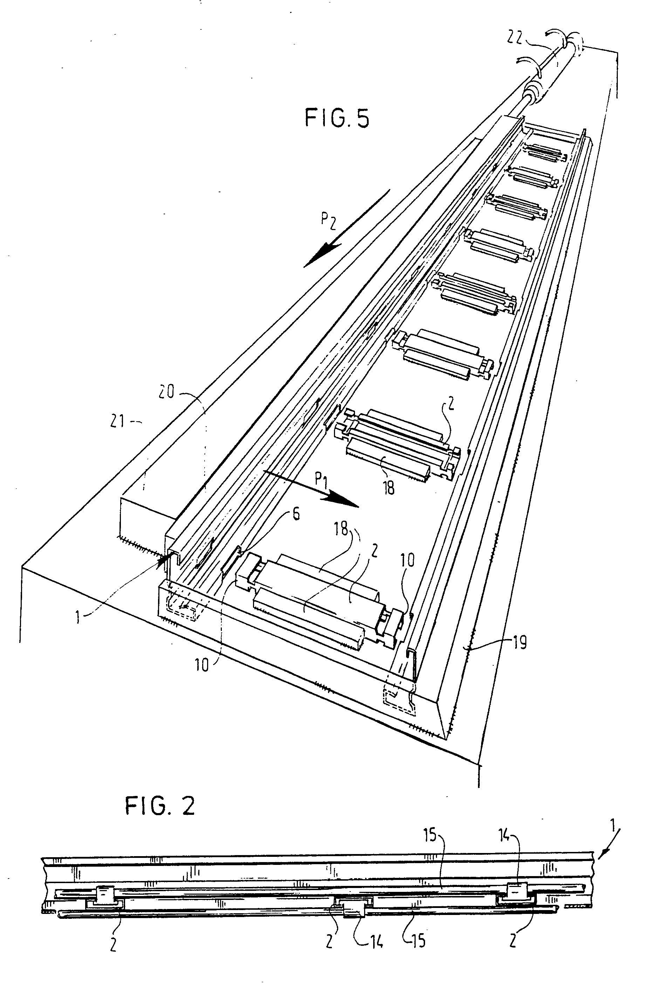

The beam is made from sheet material and has, in a cross-sectional view, mainly the shape of an angle-section profile having a shorter horizontal limb 3 and a longer vertical limb 4. In this description, vertical and horizontal relate to dispositions as generally depicted in the drawings and not to those which may exist in use. At a distance from the vertical limb 4 a vertical flange 5 is arranged along the free edge of the limb 3, the flange having openings 6 at a given distance from one another (see Fig. 5). The distance between the openings 6 determines the distance between the rungs 2.

The top edge of the vertical flange 5 is bent over to form a horizontal strip 7, the free edge of which is bent towards the horizontal limb 3.

At the level of the horizontal strip 7 the vertical limb 4 is provided with a ridge 8 directed towards the vertical flange 5 and also provided with openings 9 lying opposite the openings 6. By their circumferential edges the openings 9 constitute stop means for the head end 10 of the rung 2.

For mounting the rung 2 to the beam 1 only the end part of the rung need be passed through the opening until the head end 10 lies between the circumferential edges of the opening 9. A further insertion is prevented by the vertical wall part 11 of the vertical limb 4, which operates as an end stop. It will be obvious that in this way an immovable joint is established between beam 1 and rung 2.

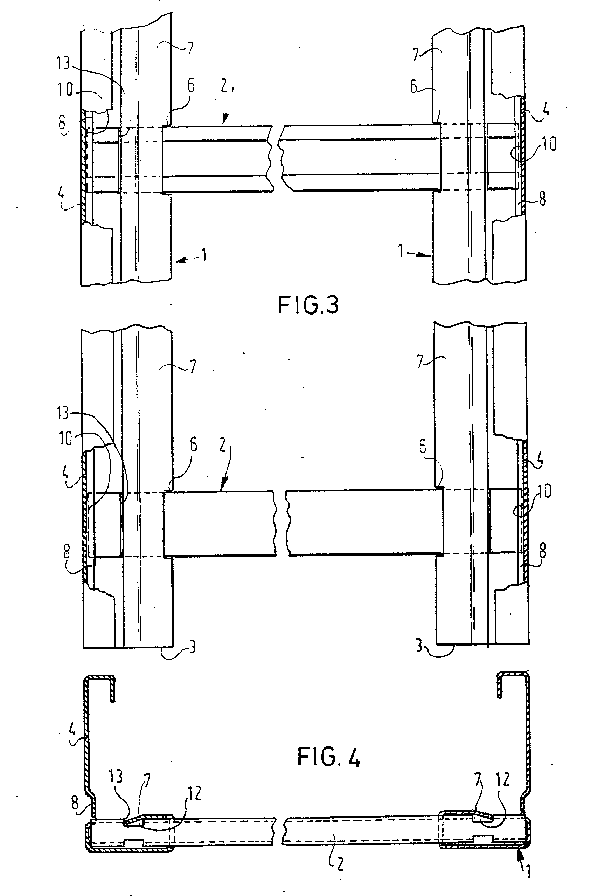

In its longitudinal sense the rung 2 is locked in the beam 1 by the free end edge of the horizontal strip 7 snapping into a recess 12 on the top or bottom side of the rung 2. The distance of the edge 13 of the recess 12 from the head face 10 of the rung corresponds with the distance a between the free edge of the horizontal strip 7 and the stop face 11. The free edge of the strip 7 and the edge 13 of the recess 12 constitute the locking means by which the rung 12 is permanently blocked in the beam 1 (see also Fig. 4).

In the embodiment shown the rung 2 mainly consists of a U-shaped sheet profile, the flanges of which are bent over inwardly at the free edge. Such a construction permits of arranging clamps 14 in the gutter-like recess of the rung 2 for fastening in or to the cable ladder a power cable 15 or the like.

By providing the recess 12 either in the bent-over flanges (Fig. 1) and the upper rung in Fig. 3 and/or in the web of the U-shaped profile (see the lower rung in Fig. 3) a cable 15 can be fastened both to the underside and the top side of the rungs of the cable ladder.

Assembling a cable ladder in the embodiment described above is thus extremely simple. For example by disposing the various rungs 2 in a pressure bench 17 (see Fig. 5) between gauge guides 18 and by disposing on both sides of the rungs 2 the beams 1 on the one hand at a fixed support 19 and on the other hand at a pressure support 20 so that the openings 6 lie opposite the head ends 10 of the rungs, the cable ladder can be fixed and locked in a single movement by displacing the pressure support 20 in the direction of the arrow P1. Additional expedients for fastening are not required, which ensures a particularly simple construction and mounting of the cable ladder.

For completeness' sake it is noted that the pressure support 20 has the shape of a wedge bearing on a fixed wedge 21. By moving the wedge-shaped pressure support 20 in the direction of the arrow P2 by means of the cylinder 22, it will move, moreover, in the direction of the arrow P1 whilst taking along the beam 1 towards the beam lying at the support 19.

Fig. 6 shows an alternative embodiment in which the beam 31 is differently designed. Also in this case the shorter horizontal limb 33 is provided with a vertical flange 35 having openings corresponding with the openings 6 in Fig. 1. The longer vertical flange is outwardly prolonged by a horizontal strip 37 adjoined by an L-shaped end part 38. This end part has openings 39 corresponding (i.e. spaced from and opposite) with the openings in the flange 35, the circumferential edges of said openings 39 serving as stop means for the end part of the rung 32.

At the openings in the flange 35 the horizontal strip 37 is provided with a resilient tongue 40 obtained by incisions 41 in the strip 37. The tongue snaps into a recess of the rung 32 corresponding with the recess 12 in Fig. 1. The head face 42 of the rung comes into contact with the inner wall of the vertical limb 34 of the beam 31.

This alternative embodiment is mounted in the same manner as the above-described embodiment shown in Figs. 1 to 5.

Within the scope of the invention other embodiments are possible.

For example, the rung 2 need not be an open profile, it may as well be a solid rung. The substantially rectangular shape may be replaced by any other form.

Locking of the rung 2, 32 in the beam 1, 31 may be performed with tongue 40 provided in the vertical flange 5, 35 or L-shaped part 38 near the opening 39, the recesses 12 being then provided in the vertical flanges of the rungs 2, 32.

**Claims**

1. A cable ladder comprising two parallel, relatively spaced beams (1) with rungs (2) arranged between them, wherein each beam is a L-shaped profile of sheet material having a longer (4) and a shorter (3) limb, said shorter limb being extended with a flange (5, 35) parallel to said longer limb (4) and having first openings (6) in the flange, each first opening receiving the end section (10) of a respective rung (2), said beam (1) being furthermore provided with means for locking said end sections (10) of said rungs (2) passed through said first openings (6), characterized in that the beam (1) is provided with second openings (9, 39) each at a distance from and opposite an associated said first opening (6), each associated first and second opening being adapted to receive a respective said end section (10), the locking means being formed by a resilient strip (7, 40) connected to said flange (5, 35) and directed towards the longer limb (4), a free edge of said strip (7, 40) being insertable into a recess (12) of a rung (2).

2. A cable ladder as claimed in claim 1, characterized in that said second openings (9) are arranged in a ridge (8) in the longer limb (4), directed towards the flange (5).

3. A cable ladder claimed in claim 1 or 2, wherein the rung is a U-section profile, in which the free edges of the flanges of the U are bent over to form rims, characterized in that the recesses (12) are provided in the bent-over rims and/or web of the U-shaped profile.

**Patentansprüche**

1. Kabelleiter mit zwei parallelen, im Abstand zueinander angeordneten Holmen (1) mit dazwischen angeordneten Sprossen (2), wobei jeder Holm ein L-förmiges Blechprofil mit einem längeren (4) und einem kürzeren (3) Schenkel aufweist, und der kürzere Schenkel sich in einem Flansch (5, 35) fortsetzt, der parallel zu dem längeren Schenkel (4) verläuft und erste Öffnungen (6) im Flansch vorgesehen sind, die jeweils den Endabschnitt (10) einer Sprosse (2) aufnehmen, wobei der Holm (1) außerdem mit Mitteln versehen ist, um die Endabschnitte (10) der Sprossen (2) festzulegen, die durch die ersten Öffnungen (6) gesteckt sind, dadurch gekennzeichnet, daß der Holm (1) mit zweiten Öffnungen (9, 39) versehen ist, die jeweils in einem Abstand von den ersten Öffnungen (6) diesen gegenüberliegend angeordnet sind, daß die einander zugeordneten ersten und zweiten Öffnungen jeweils einen Endabschnitt (10) aufnehmen und die Verriegelungsmittel von einem elastischen Streifen (7, 40) gebildet sind, der an den Flanschen (5, 35) angeformt ist und nach dem längeren Schenkel (4) weist, wobei ein freier Rand des Streifens (7, 40) in eine Ausnehmung (12) einer Sprosse (9) einfügbar ist.

2. Kabelleiter nach Anspruch 1, dadurch gekennzeichnet, daß die zweiten Öffnungen (9) in einer Rippe (8) im längeren Schenkel (4) ausgebildet sind, die nach dem Flansch (5) hin gerichtet ist.

3. Kabelleiter nach Anspruch 1 oder 2, bei welchem die Sprosse ein U-förmiges Profil besitzt, bei dem die freien Ränder der Flansche des U Zwecks Bildung einer Randschiene nach innen gebogen sind, dadurch gekennzeichnet, daß die Ausnehmüngen (12) in den abgebogenen Randschienen und/oder im Steg des U-förmigen Profils angeordnet sind.

## Revendications

1. Echelle à câbles comprenant deux poutrelles parallèles et relativement espacées (1) entre lesquelles sont disposés des barreaux (2), chaque poutrelle étant un profilé en tôle en forme de L et présentant une branche plus longue (4) et une branche plus courte (3), cette branche plus courte se prolongeant par un rebord (5, 35) qui est parallèle à la branche plus longue (4) et dans lequel sont ménagées des premières ouvertures (6), chaque première ouverture recevant la section extrême (10) d'un barreau associé (2), cette poutrelle (1) étant en outre munie de moyens permettant de verrouiller lesdites sections extrêmes (10) des barreaux (2) qui traversent lesdites premières ouvertures (6), caractérisée en ce que la poutrelle (1) présente de secondes ouvertures (9, 39) situées chacune à une certaine distance de l'une, associée, desdites premières ouvertures (6) et en regard de celle-ci, chacune des première et seconde ouvertures associées étant apte à recevoir une section extrême respective (10), les moyens de verrouillage étant constitués par une bande élastique (7, 40) qui est reliée au dit rebord (5, 35) et est orientée en direction de la branche plus longue (4), un bord libre de cette bande (7, 40) pouvant s'insérer dans une encoche (12) d'un barreau (2).

2. Echelle à câbles telle que revendiquée dans la revendication 1, caractérisée en ce que lesdites seconde ouvertures (9) sont disposées dans une nervure (8) ménagée dans la branche plus longue (4) et orientée en direction du rebord (5).

3. Echelle à câbles telle que revendiquée dans la revendication 1 ou 2, dans laquelle le barreau est un profilé à section en U dans lequel les bords libres des ailes du U sont repliées de façon à former des rebords, caractérisée en ce que les encoches (12) sont ménagées dans les rebords repliés et/ou l'âme de ce profilé en forme de U.

0 119 670

FIG.1

9
4
8
11
a
1
3
5
7
6
10 13
12
2
12

FIG.6

34
42
31
40
33
35 37 41 38
41
39
32

1

FIG.3

FIG. 4

FIG. 5

P₂

20

21

P₁

6

18

2

18

2

10

1

10

19

22

FIG. 2

15

14

1

2

2

14

15

2